# EUROPEAN PATENT SPECIFICATION

(11) **EP 0 927 396 B1**
(45) Date of publication and mention of the grant of the patent: **12.07.2000**
(21) Application number: 96936677.2
(22) Date of filing: 17.10.1996
(51) Int. Cl.: G06F 13/40

(54) **MEMORY BUS TERMINATION MODULE**
SPEICHERBUSABSCHLUSSMODUL
MODULE DE TERMINAISON DE BUS DE MEMOIRE

(30) Priority: 17.10.1995 US 544034
(43) Date of publication of application: 07.07.1999
(73) Proprietor: Micron Technology, Inc., Boise, ID 83706-0006 (US)
(72) Inventor: WALTHER, Terry, R., Boise, ID 83706 (US)
(74) Representative: Beresford, Keith Denis Lewis
(86) International application number: US9616708
(87) International publication number: WO9715012

(56) References cited:
- EP-A- 0 571 099
- WO-A-93/20519
- IBM TECHNICAL DISCLOSURE BULLETIN, vol. 32, no. 11, April 1990, NEW YORK US, pages 326-327, XP000097726 "Monolithic Terminating Resistor"
- IBM TECHNICAL DISCLOSURE BULLETIN, vol. 32, no. 4a, September 1989, NEW YORK US, pages 393-395, XP002024105 "Active Terminators for CMOS Drivers"

## Description

### Technical Field of the Invention

The present invention relates generally to personal computers and in particular to memory buses in personal computers.

### Background of the Invention

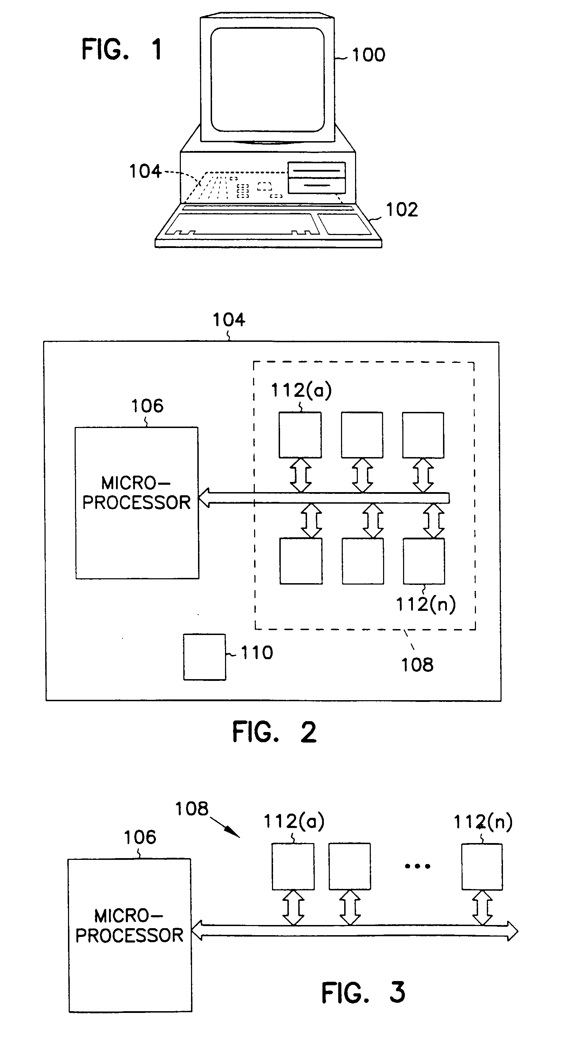

Personal computers, as shown in Figures 1 and 2, include a monitor 100, keyboard input 102 and a central processing unit 104. The processor unit typically includes a microprocessor 106, a memory bus circuit 108, and other peripheral circuitry 110. The memory bus is provided with a number of expansion sockets to allow the purchaser of the personal computer to install additional memory circuits as the user's needs change. A number of expansion sockets for memory upgrades typically exist along a memory bus. The expansion sockets remain empty unless the user decides to upgrade the system's memory by installing additional memory circuits.

In general, the characteristic impedance of the computer's memory bus interface is designed to match the impedance of a fully loaded memory bus. When the memory bus is fully loaded, therefore, the interface and the bus will be matched. The mismatch in impedance creates a ringing effect on the memory bus which results in overshoot and undershoot in a signal communicated over the bus. Such ringing has not created difficulty in communicating with typical memory circuits. This is due to the limited communication speeds of memory circuits used to-date. Memory circuits, however, are being designed which can operate at increasingly faster communication speeds.

Computers which have a memory bus and memory bus interface where the impedance therebetween is mismatched can experience errors in communication when fast data rate memory circuits are installed in a partially empty data bus.

For the reasons stated above, and for other reasons stated below which will become apparent to those skilled in the art upon reading and understanding the present specification, there is a need in the art for a computer which can have the memory capacity expanded by an end user and is capable of high speed communication without incurring data errors due to impedance mismatch. See IBM Technical Disclosure Bulletin, vol. 32, no. 11, April 1990, pages 326-327 for a description of a termination resistor, PCT Publication No. WO 93/20519 for a bus termination network, and IBM Technical Disclosure Bulletin, vol. 32, no. 4A, September 1989, pages 393-395 for a description of active terminators for CMOS drivers.

The present invention seeks to provide therefore improvements in memory communications.

In particular, the present invention describes a memory bus termination module comprising a module housing adapted to fit in use into a memory socket of a memory bus having a plurality of electrically-interconnected memory sockets, the module housing including communication line input and output communications; and termination circuity connected to the communication line input and output connections. The module housing can be provided to fit into a socket designed to receive a JEDEC standard circuit package. and output connections.

In another embodiment, a memory bus is described which comprises a plurality of memory circuit expansion sockets, and at least one high data rate memory located in one of the memory circuit expansion sockets. the memory bus also comprises a termination module housing located in one of the memory circuit expansion sockets and including communication line input and output connections, and termination circuitry having a plurality of clamping diodes connected to the communication line input and output connections. The memory bus can include a high data rate memory which has a minimum data rate of 66 MHz, and can be designed as a synchronous memory circuit.

### Brief Description of the Drawings

Figure 1 illustrates a personal computer;
Figure 2 is a block diagram of the CPU of Figure 1;
Figure 3 is a memory bus of Figure 2;
Figure 4 is an ideal step function signal;
Figure 5 is a step function signal with ringing;
Figure 6 is a 33 MHz signal pulse on a computer memory bus;
Figure 7 is a 66 MHz signal pulse on a computer memory bus;
Figure 8 is one embodiment of a termination module of the present invention;
Figure 9 is a schematic diagram of the module of Figure 8;
Figure 10 is a schematic diagram of an alternate module of Figure 8;
Figure 11 is a schematic diagram of an alternate module of Figure 8;
Figure 12 is a schematic diagram of an alternate module of Figure 8;
Figure 13 is a schematic diagram of an alternate module of Figure 8; and
Figure 14 is a schematic diagram of an alternate module of Figure 8.

### Detailed Description of the Preferred Embodiment

In the following detailed description of the preferred embodiments, reference is made to the accompanying drawings which form a part hereof, and in which is shown by way of illustration specific preferred embodiments in which the inventions may be practiced. These embodiments are described in sufficient detail to enable those skilled in the art to practice the invention, and it is to be understood that other embodiments may be utilized and that logical, mechanical and electrical changes may be made without departing from the spirit and scope of the present inventions. The following detailed description is, therefore, not to be taken in a limiting sense, and the scope of the present inventions is defined only by the appended claims.

There are a number of integrated circuit memories commercially available. For example, dynamic memory circuits having memory cells arranged to be accessed in a random fashion are referred to as dynamic random access memories, DRAMs. These memories can be produced in a variety of designs which provide different methods of reading from and writing to the dynamic memory cells of the memory. One such method is page mode operation. Page mode operations in a DRAM are defined by the method of accessing a row of a memory cell array and randomly accessing different columns of the array. Data stored at the row and column intersection can be read and output while that column is accessed. Page mode DRAMs require access steps which limit the communication speed of the memory circuit. A typical communication speed using page mode DRAMs is approximately 33 MHz.

An alternate type of memory circuit is the extended data output (EDO) memory which allows data stored at a memory array address to be available as output after the addressed column has been closed. This memory circuit can increase some communication speeds by allowing shorter access signals without reducing the time in which memory output data is available on the memory bus. A more detailed description of a DRAM having EDO features is provided in the "1995 DRAM Data Book" pages 1-1 to 1-30 available from Micron Technology, Inc. Boise, Idaho, the assignee of the present application.

Yet another type of memory circuit is a burst access memory which receives one address of a memory array on external address lines and automatically addresses a sequence of columns manner without providing additional column addresses on the external address lines. Burst EDO memory circuits are capable of outputting data at significantly faster communication rate than previous memory circuits. Burst EDO memories can operate at speeds in excess of 66 MHz, with potential frequencies of 200 MHz. Another type of high speed memory device is a synchronous memory. These memory devices operate in synchronization with an externally provided clock signal. One type of synchronous memory is a synchronous dynamic random access memory (SDRAM).

As described above, a personal computer includes a microprocessor and a memory bus. The computer is usually sold by the manufacture with a partially full memory bus. This allows the purchaser of the computer to customize the computer to meet their personal needs. The memory bus interface is designed to have an impedance which matches a fully loaded memory bus. If the memory bus is only partially full, the memory bus and its interface will have a mismatched impedance. Mismatched impedances along a communication line, as known to one skilled in the art, result in signal ringing when a signal is transmitted on the communication line. The ringing is a result of signal "ghosts" which reflect or bounce along the communication line.

Figure 3 illustrates a memory bus 108 where the memory socket 112(n) farthest from the interface with the microprocessor 106 does not contain an integrated memory circuit. When a signal is communicated by the microprocessor to the memory bus, signal reflection can occur. As known to one skilled in the art, the reflection created by an open, or unterminated, bus is maximized. Further, because the interface between the microprocessor and the bus is mismatched, a signal reflected by the end of the bus will be partially reflected back down the bus by the interface.

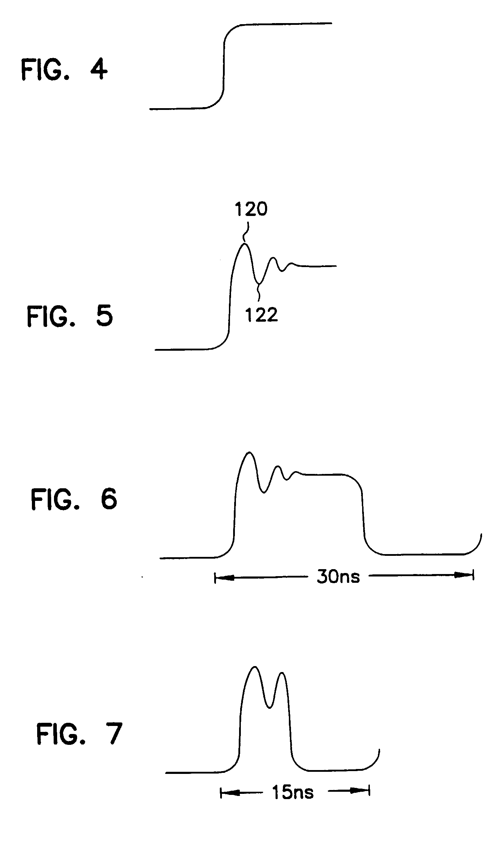

An ideal step function signal, low to high signal transition, communicated by the microprocessor to a memory bus line is shown in Figure 4. The signal transitions to a high state with little or no fluctuation in the signal. Figure 5 shows a step signal which results from ringing in a communication line. The signal experiences both overshoot and undershoot of the desired final signal level. In a worst case situation where the communication line is open and has a high impedance mismatch the overshoot 120 and undershoot 122 can be 50% to 100% of the final signal level. The signal ringing is a damped function, such that the ringing decreases in amplitude over time.

To appreciate the problems which ringing can create in a memory bus consider the length of a typical signal in a system using 33 MHz memories. The period or signal length would be 30 ns and the ringing incurred would be approximately 3-5 ns for a 2 cm bus. Figure 6 illustrates one positive pulse signal in such a system. The 10 ns of stable signal (15 ns - 5 ns) is adequate time for the signal to be correctly communicated to a memory connected to the bus. If the communication frequency is increased to 66 MHz, the period is decreased to 15 ns, Figure 7. Assuming 5 ns of ringing, the stable signal length is reduced to 2.5 ns. It can be appreciated that errors in communication can occur as the amount of stable signal is reduced.

A memory bus termination module is illustrated in Figure 8. The termination module is intended to be placed in the memory expansion socket adapted to receive a single in-line memory module (SIMM). The termination module housing is designed as a SIMM board and placed in the socket 112(n) located the farthest from the microprocessor mother board interface. As such, a preferred embodiment of the present invention is a housing or package designed to fit into a standard memory socket, including JEDEC standard memory module pinouts and mechanical dimensions. It will be appreciated by those skilled in the art that this package can be any configuration used in memory circuit and computer bus designs and is not limited to SIMMs. The module contains circuitry which reduces or eliminates the ringing experienced on a partially full memory bus. The memory bus termination module can be installed by the computer manufacture when the computer is assembled. Alternatively, the termination module can be installed by a purchaser of the computer when upgrading the system to include high data speed memories, such as burst access memories.

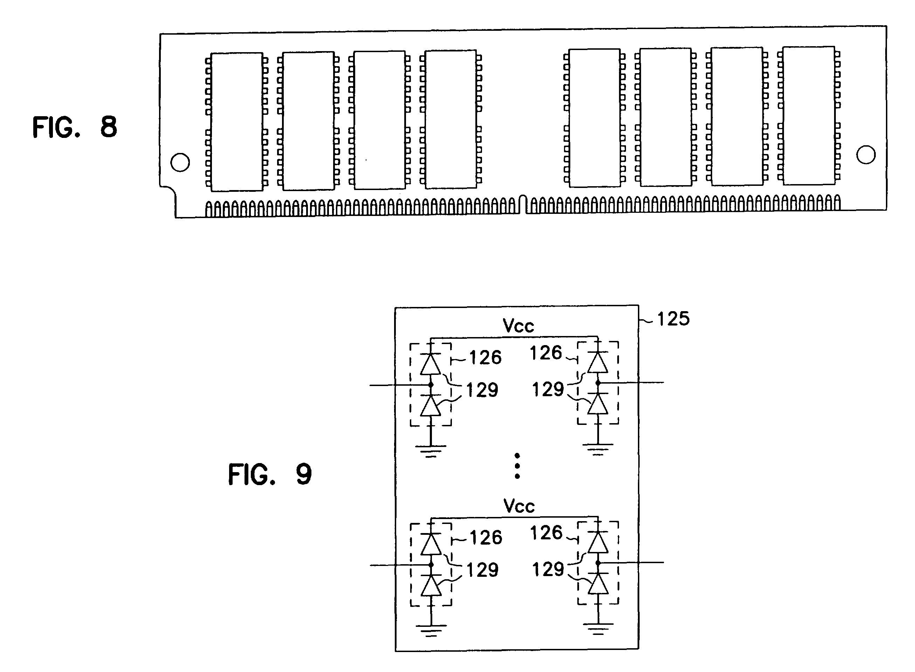

Figure 9 illustrates one embodiment of the circuitry included in a memory module of the present invention. The termination module 125 has two clamping diodes 126 arranged in the module such that they are connected to each communication line of the bus. These communication lines include data input / output, address lines, row address signal (RAS*), and column address signal (CAS*). The diodes clamp overshoot and undershoot voltages on the communication lines.

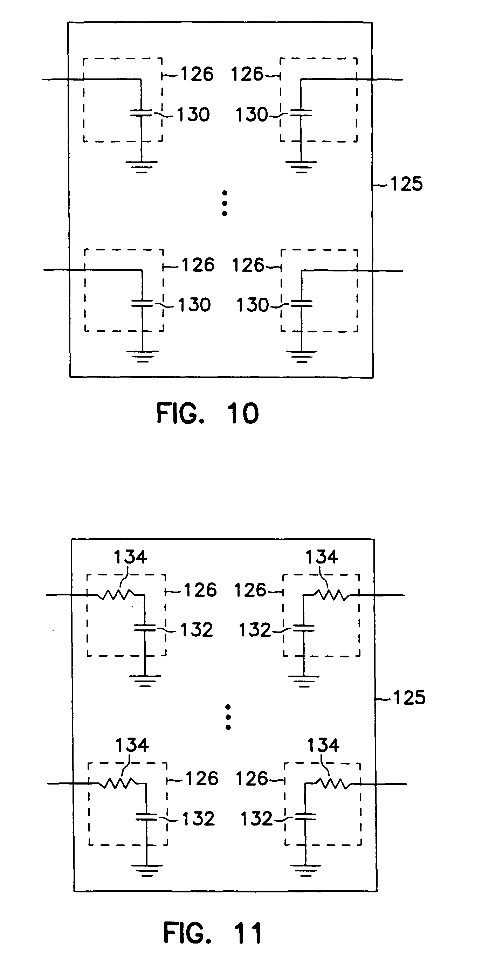

Figure 10 illustrates an alternate embodiment of the circuitry included in a memory module of the present invention. The termination module 125 has clamping capacitors 130 arranged in the module such that they are connected to each communication line of the bus. These communication lines include data input / output, address lines, row address signal (RAS*), and column address signal (CAS*). Figure 11 illustrates an alternate embodiment of the circuitry included in a memory module of the present invention. The termination module 125 has clamping capacitors 132 and a line resistor 134 arranged in the module such that they are connected to each communication line of the bus.

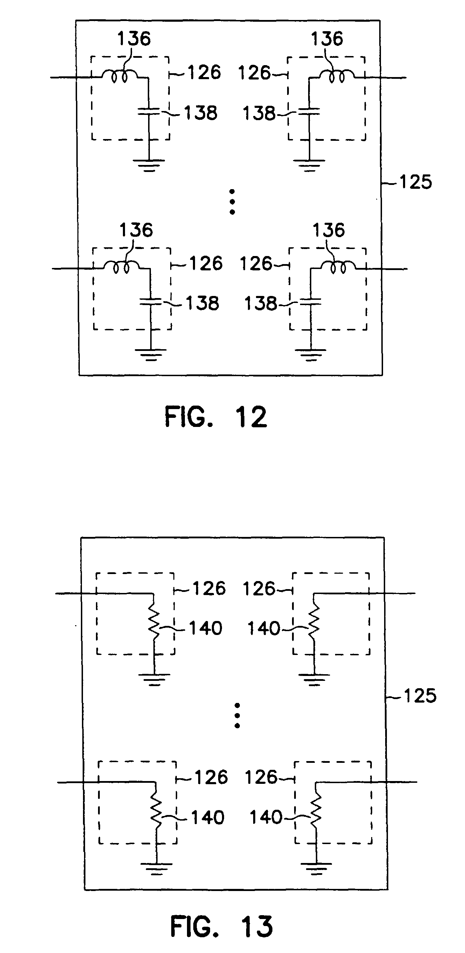

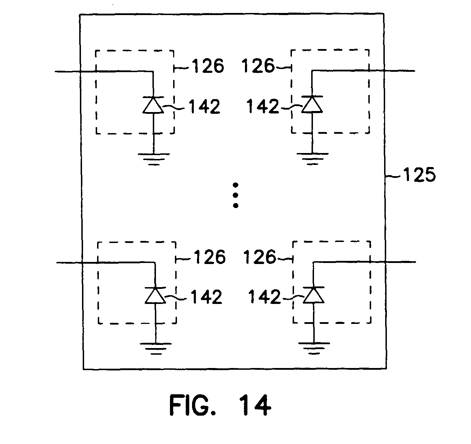

Figure 12 illustrates an alternate embodiment of the circuitry included in a memory module of the present invention. The termination module 125 has clamping capacitors 138 and an inductor 136 arranged in the module such that they are connected to each communication line of the bus. Figure 13 provides a resistor 140 arranged in the module such that they are connected to each communication line of the bus. The termination circuit 125 of Figure 14 uses one diode 142 to terminate each communication line of the bus. It will be appreciated by those skilled in the art that the circuitry of Figures 9-14 can be connected to any bias voltage and not limited to a ground potential as illustrated. Further, although the termination module is preferably installed in the memory socket 112(n) farthest from the interface with the microprocessor 106, multiple termination modules could be used in any number memory sockets 112. In addition, memory socket 112(n) could remain empty and a termination module placed in a different socket.

### Conclusion

A memory bus termination module has been described which can be placed in the last socket of a computer memory expansion bus. The memory bus can be filled with additional memory circuits, including burst memories. When all sockets are full, the termination module can be removed and replaced with an additional memory circuit. The memory termination module, thereby, reduces overshoot and undershoot which can create errors in communicated data over a mismatched memory bus.

## Claims

1. A memory bus termination module comprising:
a module housing adapted to fit in use into a memory socket of a memory bus having a plurality of electrically-interconnected memory sockets, the module housing including communication line input and output connections; and
termination circuitry (126) connected to the communication line input and output connections.

2. The memory bus termination module of claim 1 wherein:
the module housing fits into a socket designed to receive a JEDEC standard circuit package.

3. The memory bus termination module of any preceding claim wherein the termination circuitry comprises a clamping diode (129) connected to the communication line input and output connections.

4. The memory bus termination module of any of claims 1 and 2 wherein the termination circuitry comprises a plurality of clamping diodes (129) connected to the communication line input and output connections.

5. The memory bus termination module of any of the preceding claims wherein the termination circuitry comprises a capacitor (130) connected to the communication line input and output connections.

6. The memory bus termination module of any of claims 1 to 4 wherein the termination circuitry comprises a capacitor (132) and a resistor (134) connected in series with the communication line input and output connections.

7. The memory bus termination module of any of claims 1 to 4 wherein the termination circuitry comprises a capacitor (138) and an inductor (136) connected in series with the communication line input and output connections.

8. The memory bus termination module of any of claims 1 to 4 wherein the termination circuitry comprises a resistor (140) connected to the communication line input and output connections.

9. The memory bus termination module of any preceding claim wherein the module housing is designed as a single in-line memory module (SIMM).

10. Apparatus comprising the memory bus termination module of claim 1 in combination with said memory bus wherein the memory bus termination module is installed in the memory bus (108) comprising a plurality of electrically-interconnected memory circuit expansion sockets (112) having at least one high data rate memory located in one of the memory circuit expansion sockets, and the module housing is located in one of the memory circuit expansion sockets, the termination circuitry having a plurality of clamping diodes (129) connected to the communication line input and output connections.

11. Apparatus as claimed in claim 10 wherein the high data rate memory has a minimum data rate of 66MHz.

12. Apparatus as claimed in any of claims 10 and 11 wherein the high data rate memory is a synchronous memory circuit.

13. Apparatus as claimed in any of claims 10 to 12 wherein the termination module housing is designed as a single in-line memory module (SIMM).

14. A method of reducing communication errors in a memory bus connected to a microprocessor, the method comprising the step of:
installing a termination module (125) in a memory expansion socket (112) located along the memory bus (108) wherein the memory bus includes a plurality of electrically-interconnected memory expansion sockets, the termination module comprises a module housing adapted to fit into a memory socket and having communication line input and output connections, and termination circuitry (126) connected to the communication line input and output connections.

15. The method of claim 14 further including the steps of:
installing memory circuits in empty memory expansion sockets; and
replacing the termination module with a memory circuit when all of the expansion sockets are full.

## Patentansprüche

1. Speicherbusabschlußmodul, das aufweist:
ein Modulgehäuse, das angepaßt ist, im Gebrauch in einen Speichersteckplatz eines Speicherbusses zu passen, der mehrere elektrisch miteinander verbundene Speichersteckplätze aufweist, wobei das Modulgehäuse Übertragungsleitungs-Eingangs- und Ausgangsverbindungen aufweist; und einen Abschlußschaltungskomplex (126), der mit den Übertragungsleitungs-Eingangs- und Ausgangsverbindungen verbunden ist.

2. Speicherbusabschlußmodul nach Anspruch 1, wobei: das Modulgehäuse in einen Steckplatz paßt, der dazu bestimmt ist, ein JEDEC-Standard-Schaltungsgehäuse aufzunehmen.

3. Speicherbusabschlußmodul nach einem der vorhergehenden Ansprüche, wobei der Abschlußschaltungskomplex eine Klemmdiode (129) aufweist, die mit den Übertragungsleitungs-Eingangs- und Ausgangsverbindungen verbunden ist.

4. Speicherbusabschlußmodul nach einem der Ansprüche 1 und 2, wobei der Abschlußschaltungskomplex mehrere Klemmdioden (129) aufweist, die mit den Übertragungsleitungs-Eingangs- und Ausgangsverbindungen verbunden sind.

5. Speicherbusabschlußmodul nach einem der vorhergehenden Ansprüche, wobei der Abschlußschaltungskomplex einen Kondensator (130) aufweist, der mit den Übertragungsleitungs-Eingangs- und Ausgangsverbindungen verbunden ist.

6. Speicherbusabschlußmodul nach einem der Ansprüche 1 bis 4, wobei der Abschlußschaltungskomplex einen Kondensator (132) und einen Widerstand (134) aufweist, die in Reihe mit den Übertragungsleitungs-Eingangs- und Ausgangsverbindungen geschaltet sind.

7. Speicherbusabschlußmodul nach einem der Ansprüche 1 bis 4, wobei der Abschlußschaltungskomplex einen Kondensator (138) und eine Drossel (136) aufweist, die in Reihe mit den Übertragungsleitungs-Eingangs- und Ausgangsverbindungen geschaltet sind.

8. Speicherbusabschlußmodul nach einem der Ansprüche 1 bis 4, wobei der Abschlußschaltungskomplex einen Widerstand (140) aufweist, der mit den Übertragungsleitungs-Eingangs- und Ausgangsverbindungen verbunden ist.

9. Speicherbusabschlußmodul nach einem der vorhergehenden Ansprüche, wobei das Modulgehäuse als ein Single-In-Line-Speichermodul (SIMM) gestaltet ist.

10. Vorrichtung, die das Speicherbusabschlußmodul nach Anspruch 1 in Kombination mit dem Speicherbus aufweist, wobei das Speicherbusabschlußmodul im Speicherbus (108) installiert ist, der mehrere elektrisch miteinander verbundene Erweiterungssteckplätze für Speicherschaltungen (112) aufweist, wobei mindestens ein Speicher mit hoher Datenrate in einem der Erweiterungssteckplätze für Speicherschaltungen angeordnet ist, und das Modulgehäuse in einem der Erweiterungssteckplätze für Speicherschaltungen angeordnet ist, wobei der Abschlußschaltungskomplex mehrere Klemmdioden (129) aufweist, die mit den Übertragungsleitungs-Eingangs- und Ausgangsverbindungen verbunden sind.

11. Vorrichtung nach Anspruch 10, wobei der Speicher mit hoher Datenrate eine minimale Datenrate von 66MHz aufweist.

12. Vorrichtung nach einem der Ansprüche 10 und 11, wobei der Speicher mit hoher Datenrate eine Synchronspeicherschaltung ist.

13. Vorrichtung nach einem der Ansprüche 10 bis 12, wobei das Abschlußmodulgehäuse wobei das Modulgehäuse als ein Single-In-Line-Speichermodul (SIMM) gestaltet ist.

14. Verfahren zur Verminderung von Übertragungsfehlern in einem Speicherbus, der mit einem Mikroprozessor verbunden ist, wobei das Verfahren den Schritt aufweist:
Installieren eines Abschlußmoduls (125) in einem Speichererweiterungssteckplatz (112), der längs des Speicherbusses (108) angeordnet ist, wobei der Speicherbus mehrere elektrisch miteinander verbundene Speichererweiterungssteckplätze aufweist, das Abschlußmodul ein Modulgehäuse aufweist, das angepaßt ist, in einen Speichersteckplatz zu passen, und Übertragungsleitungs-Eingangs- und Ausgangsverbindungen und einen Abschlußschaltungskomplex (126) aufweist, der mit den Übertragungsleitungs-Eingangs- und Ausgangsverbindungen verbunden ist.

15. Verfahren nach Anspruch 14, das ferner die Schritte aufweist:
Installieren von Speicherschaltungen in leeren Speichererweiterungssteckplätzen; und
Ersetzen des Abschlußmoduls durch eine Speicherschaltung, wenn alle Erweiterungssteckplätze voll sind.

## Revendications

1. Un module de terminaison d'un bus de mémoire comprenant :
un boîtier de module prévu pour s'adapter, lors de son utilisation, dans un support mémoire d'un bus de mémoire présentant une pluralité de supports mémoires interconnectés électriquement, le boîtier de module comprenant des connexions d'entrée et de sortie de ligne de communication ; et
des circuits de terminaison (126) reliés aux connexions d'entrée et de sortie de la ligne de communication.

2. Le module de terminaison de bus de mémoire selon la revendication 1, dans lequel :
le boîtier de module s'adapte à un support mémoire conçu pour recevoir un boîtier standard à la norme JEDEC.

3. Le module de terminaison de bus de mémoire selon l'une quelconque des revendications précédentes, dans lequel les circuits de terminaison comprennent une diode de maintien de niveau (129) reliée aux connexions d'entrée et de sortie de la ligne de communication.

4. Le module de terminaison de bus de mémoire selon l'une quelconque des revendications 1 et 2, dans lesquels les circuits de terminaison comprennent une pluralité de diodes de maintien de niveau (129) reliées aux connexions d'entrée et de sortie de la communication.

5. Le module de terminaison de bus de mémoire selon l'une quelconque des revendications précédentes, dans lequel les circuits de terminaison comprennent un condensateur (130) relié aux connexions d'entrée et de sortie de la ligne de communication.

6. Le module de terminaison de bus de mémoire selon l'une quelconque des revendications 1 à 4, dans lequel les circuits de terminaison comprennent un condensateur (132) et une résistance (134) reliés en série avec les connexions d'entrée et de sortie de la ligne de communication.

7. Le module de terminaison de bus de mémoire selon l'une quelconque des revendications 1 à 4, dans lequel les circuits de terminaison comprennent un condensateur (138) et une inductance (136) reliés en série avec les connexions d'entrée et de sortie de la ligne de communication.

8. Le module de terminaison de bus de mémoire selon l'une quelconque des revendications 1 à 4, dans lequel les circuits de terminaison comprennent une résistance (140) reliée aux connexions d'entrée et de sortie de la ligne de communication.

9. Le module de terminaison de bus de mémoire selon l'une quelconque des revendications précédentes, dans lequel le boîtier de module est conçu sous forme de module à une seule rangée de modules de mémoire en ligne (SIMM).

10. Un appareil comprenant le module de terminaison de bus de mémoire selon la revendication 1, en combinaison avec ledit bus de mémoire dans lequel le module de terminaison du bus de mémoire est installé dans le bus de mémoire (108) comprenant une pluralité de supports d'extension (112) d'un circuit mémoire, inter-connectés électriquement, avec au moins une mémoire à débit élevé de données située dans l'un des supports d'extension du circuit mémoire, le boîtier de module étant situé dans l'un des supports d'extension du circuit mémoire, les circuits de terminaison présentant une pluralité de supports de diodes de maintien de niveau (129) reliées aux connexions d'entrée et de sortie de la ligne de communication.

11. Appareil selon la revendication 10, dans lequel la mémoire à débit élevé de données présente un débit minimal de données de 66 MHz.

12. Appareil selon l'une quelconque des revendications 10 et 11, dans lequel la mémoire à débit élevé de données est un circuit à mémoire synchrone.

13. Appareil selon l'une quelconque des revendications 10 à 12, dans lequel le boîtier du module de terminaison est conçu sous forme de module à une seule rangée de modules de mémoire en ligne (SIMM).

14. Un procédé de diminution d'erreurs de communication dans un bus de mémoire relié à un microprocesseur, le procédé comprenant les étapes consistant
à installer un module de terminaison (125) dans un support d'extension de mémoire (112) situé sur le bus de mémoire (108), où le bus de mémoire comprend une pluralité de supports d'extension de mémoire, interconnectés électriquement, le module de terminaison comprenant un boîtier de module conçu pour s'adapter à un support de mémoire et présentant des connections d'entrée et de sortie de ligne de sortie de ligne de communication, les circuits de terminaison (126) étant reliés aux connections d'entrée et de sortie de la ligne de communication.

15. Le procède de la revendication 14 comprenant en outre les étapes consistant :
à installer des circuits mémoire dans des supports d'extension de mémoire non occupés ; et
à remplacer le module de terminaison avec un circuit de mémoire lorsque tous les supports d'extension sont occupés.
